# FASCICULE DE BREVET EUROPEEN

(11) **EP 2 242 671 B1**
(45) Date de publication et mention de la délivrance du brevet: **14.09.2016**
(21) Numéro de dépôt: 09707618.6
(22) Date de dépôt: 05.01.2009
(51) Int. Cl.: B60T 7/12

(54) **PROCEDE DE DESSERRAGE DE FREINS D'UN VEHICULE AUTOMOBILE EQUIPE D'UN DISPOSITIF D'ASSISANCE AU DEMARRAGE EN COTE, UN TEL DISPOSITIF D'ASSISTANCE ET VEHICULE AUTOMOBILE LE COMPORTANT**
VERFAHREN ZUM LÖSEN DER BREMSEN IN EINEM MIT EINER BERGANFAHRHILFE AUSGESTATTETEN FAHRZEUG, SOLCHE BERGANFAHRHILFE UND KRAFTFAHRZEUG DAMIT
METHOD OF RELEASING THE BRAKES IN A MOTOR VEHICLE EQUIPPED WITH A HILL START ASSISTANCE DEVICE, HILL START ASSISTANCE DEVICE SUCH AS THIS AND MOTOR VEHICLE COMPRISING SAME

(30) Priorité: 05.02.2008 FR 0850707
(43) Date de publication de la demande: 27.10.2010
(73) Titulaire: Renault s.a.s., 92100 Boulogne-Billancourt (FR)
(72) Inventeur: DE-RINALDIS, Alessandro, F-75018 Paris (FR)
(86) Numéro de dépôt international: PCT/FR2009/050006
(87) Numéro de publication internationale: WO 2009/098417

(56) Documents cités:
- EP-A- 1 502 833
- WO-A-2004/058551
- DE-A1- 19 950 034
- US-A- 5 484 044
- US-A1- 2002 020 575
- US-A1- 2006 108 868

## Description

### DOMAINE TECHNIQUE:

La présente invention concerne un procédé de desserrage des freins d'un véhicule automobile équipé d'un dispositif d'assistance au démarrage en côte. Elle concerne également un tel dispositif d'assistance et un véhicule automobile le comportant.

Lorsqu'un véhicule automobile est à l'arrêt dans une côte, il est souvent difficile, voire parfois dangereux, de faire démarrer ce véhicule dans le sens ascendant. Pour bien des conducteurs, les démarrages en côte dans le sens ascendant sont de ce fait une source importante de stress.

Lors d'un démarrage en côte, le conducteur doit éviter autant que possible un recul de son véhicule, sans faire caler le moteur d'entraînement de ce véhicule et, pour ce faire, il lui faut combiner deux actions qui sont le desserrage des freins et l'accouplement progressif des roues d'entraînement du véhicule au moteur d'entraînement de ce véhicule.

Des dispositifs de contrôle et de commande généralement appelés « dispositifs d'aide au démarrage » ou « dispositifs d'assistance au démarrage » ont été mis au point de manière à faciliter la tâche du conducteur lors d'un démarrage en côte, en gérant ce démarrage à sa place lorsque ce conducteur appuie sur la pédale d'accélération après avoir arrêté de maintenir manuellement les freins du véhicule dans leur position de freinage.

### TECHNIQUES ANTERIEURES :

Un dispositif d'assistance au démarrage en côte tel que mentionné précédemment est décrit dans la demande de brevet français FR-2 736 027. Après que le conducteur a arrêté de maintenir manuellement les freins du véhicule dans leur position serrée, ce dispositif prend le relais du conducteur en maintenant à son tour le serrage des freins jusqu'à réception d'une commande de faire démarrer le véhicule. Si le conducteur quitte alors le poste de conduite du véhicule sans avoir actionné au préalable le frein à main ou frein de stationnement, une alarme est déclenchée à partir d'une information en provenance d'un détecteur de présence sur le siège du conducteur et d'une information à partir d'un capteur de pression, afin d'alerter le ou les occupants du véhicule. Si cette alarme n'est pas perçue ou ne se déclenche pas, ou bien encore s'il n'en est pas tenu compte, le frein de stationnement n'est pas actionné alors que le maintien du serrage des freins par un liquide sous pression dans un circuit hydraulique de transmission d'une commande de freinage n'est pas considéré comme pouvant maintenir et immobiliser un véhicule en stationnement avec un degré de sécurité suffisant.

Un autre dispositif d'assistance au démarrage en côte est décrit dans le document WO 2004/058551. Après que le conducteur a arrêté de maintenir manuellement les freins du véhicule dans leur position serrée, ce dispositif d'assistance au démarrage en côte maintient le serrage des freins jusqu'à réception d'une commande de faire démarrer le véhicule. En l'absence d'une telle commande, le dispositif d'assistance au démarrage en côte relâche les freins à l'expiration d'une temporisation prédéterminée. Suite à cela, le véhicule est brutalement entraîné par son propre poids dans le cas où le frein à main ou frein de stationnement n'a pas été serré auparavant et où le véhicule est dans une pente. Dans un tel cas, il s'ensuit un risque non négligeable d'accident, en particulier si le conducteur n'est plus correctement installé au poste de conduite du véhicule à l'expiration de la temporisation de durée prédéterminée.

En outre le document WO 2004/058551 divulgue en procédé de desserrage de freins selon le préambule de la revendication indépendante 1.

### EXPOSE DE L'INVENTION

L'invention a au moins pour but d'améliorer la sécurité liée à l'utilisation d'un véhicule automobile équipé d'un dispositif d'assistance au démarrage en côte.

Selon l'invention, ce but est atteint grâce à un procédé de desserrage de freins d'un véhicule automobile équipé d'un dispositif d'assistance au démarrage en côte , comprenant une étape dans laquelle :
b) le dispositif d'assistance desserre les freins progressivement si aucune commande de démarrage du véhicule n'a lieu après qu'a pris fin un maintien manuel des freins du véhicule dans une position d'immobilisation de ce véhicule à l'arrêt.

Avantageusement, le procédé comporte une étape qui commence dès qu'a pris fin ledit maintien manuel des freins dans la position d'immobilisation du véhicule à l'arrêt et dans laquelle :
a) pendant une temporisation prédéterminée à l'expiration de laquelle est engagée l'étape b), le dispositif d'assistance maintient automatiquement les freins du véhicule dans ladite position d'immobilisation de ce véhicule si aucune commande de démarrage du véhicule n'a lieu.

Avantageusement, dans l'étape b), le dispositif d'assistance desserre les freins à une vitesse contrôlée.

Avantageusement, au cours de l'étape b), le dispositif d'assistance réduit la vitesse de desserrage des freins.

Avantageusement, au cours de l'étape b), le dispositif d'assistance effectue successivement au moins une première action, à savoir l'action de maintenir la vitesse de desserrage des freins sensiblement constante à une première valeur, puis une deuxième action, à savoir l'action de réduire la vitesse de desserrage des freins, puis une troisième action, à savoir l'action de maintenir la vitesse de desserrage des freins sensiblement constante à une deuxième valeur inférieure à ladite première valeur.

Avantageusement, le serrage des freins résulte de l'application d'une pression de serrage et, avant la fin de l'étape b), le dispositif d'assistance évalue une pression minimale de serrage en deçà de laquelle la pression de serrage des freins est insuffisante pour que ces freins parviennent à maintenir le véhicule immobilisé à l'encontre du poids de ce véhicule.

Avantageusement, à partir d'une information relative à une mesure de ladite pression de serrage, le dispositif d'assistance effectue l'action de réduire la vitesse de desserrage des freins lorsque la pression de serrage des freins atteint un seuil choisi parmi ladite pression minimale de serrage et une pression de serrage différente de cette pression minimale de serrage d'une quantité prédéterminée.

Selon l'invention, au moins dans l'étape b), le dispositif d'assistance effectue une action spécifique en cas de détection d'une mise en mouvement du véhicule selon la direction antéro-postérieure de ce véhicule, cette action spécifique étant un arrêt du desserrage des freins pendant une temporisation de durée prédéterminée.

Avantageusement, le dispositif d'assistance vérifie régulièrement au moins une information relative à une détection d'une éventuelle commande de démarrage du véhicule, tout au long du procédé de desserrage des freins, et interrompt prématurément ce procédé si une telle commande de démarrage du véhicule est détectée.

L'invention a également pour objet un dispositif d'assistance au démarrage en côte qui est prévu pour un véhicule automobile et qui est conçu pour desserrer progressivement les freins de ce véhicule automobile si aucune commande de démarrage du véhicule n'a lieu après qu'a pris fin un maintien manuel des freins du véhicule dans une position d'immobilisation de ce véhicule à l'arrêt.

Avantageusement, ce dispositif d'assistance au démarrage en côte est conçu pour mettre en oeuvre un procédé tel que défini ci-dessus.

L'invention a encore pour objet un véhicule automobile qui comporte un dispositif d'assistance tel que défini ci-dessus.

### DESCRIPTION SOMMAIRE DES FIGURES

L'invention sera bien comprise à la lecture de la description qui va suivre, donnée uniquement à titre d'exemple et faite en se référant aux dessins annexés, parmi lesquels :
- la figure 1 est un schéma simplifié d'une installation de freinage qui équipe un véhicule automobile et qui est conçue pour mettre en oeuvre un procédé de desserrage des freins de ce véhicule ; et
- la figure 2 est un organigramme de la logique de déroulement de ce procédé, qui est conforme à l'invention.

### MANIERE POSSIBLE DE REALISER L'INVENTION

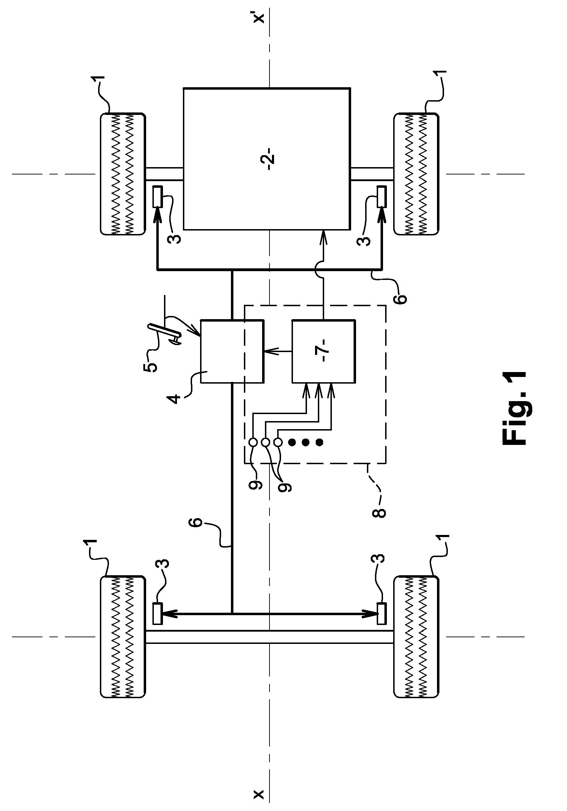

Sur la figure 1, un véhicule automobile est symbolisé par ses quatre roues 1 et par son système d'entraînement 2, qui est accouplé à plusieurs de ces roues 1 et qui comprend classiquement un moteur, tel qu'un moteur thermique ou électrique ou bien hybride, un embrayage et une boîte de vitesses.

Dans ce qui suit et dans les revendications annexées, les termes « avant », « arrière », « antéropostérieur », ainsi que les termes analogues, se réfèrent au sens normal de progression du véhicule automobile.

A chaque roue 1 est associé un frein 3 constitutif d'une installation de freinage, qui comprend en outre un système 4 de transmission de commandes vers les freins 3. Ce système 4 est connu en soi et ses constituants ne sont pas représentés dans un souci de clarté. Parmi ces constituants, il peut notamment y avoir un réservoir de liquide hydraulique, un maître-cylindre ou un autre dispositif générateur ou doseur de pression hydraulique sous la commande d'une pédale de frein 5. D'une manière connue en soi, le système 4 de transmission de commandes peut également comprendre une pompe haute pression, un accumulateur de pression hydraulique relié à cette pompe, ainsi qu'une électrovanne de commutation connectée de manière à pouvoir mettre en communication l'accumulateur de pression ou le maître-cylindre avec tout ou partie des freins 3. Plusieurs constituants de ce système 4 sont reliés entre eux et/ou aux freins 3 par un circuit hydraulique, dont plusieurs branches sont schématisées et référencées 6 à la figure 1.

Toujours sur cette figure 1, la référence **7** désigne une unité électronique de contrôle et de commande, qui fait partie d'un dispositif d'assistance au démarrage en côte **8** et qui est à même de commander le système d'entraînement **2,** ainsi que l'électrovanne de commutation du système **4,** de manière à gérer un démarrage du véhicule à la place du conducteur de ce véhicule. Cette unité électronique **7** est raccordée à plusieurs capteurs **9,** qui comptent notamment un capteur de mesure de l'inclinaison de l'axe antéro-postérieur **X-X'** du véhicule par rapport à l'horizontale, au moins un capteur d'estimation ou de mesure de la pression de serrage des freins **3,** ainsi qu'un capteur ayant pour fonction de détecter un déplacement du véhicule vers l'avant ou vers l'arrière. Ce dernier capteur peut par exemple être un capteur de vitesse ou un capteur d'accélération.

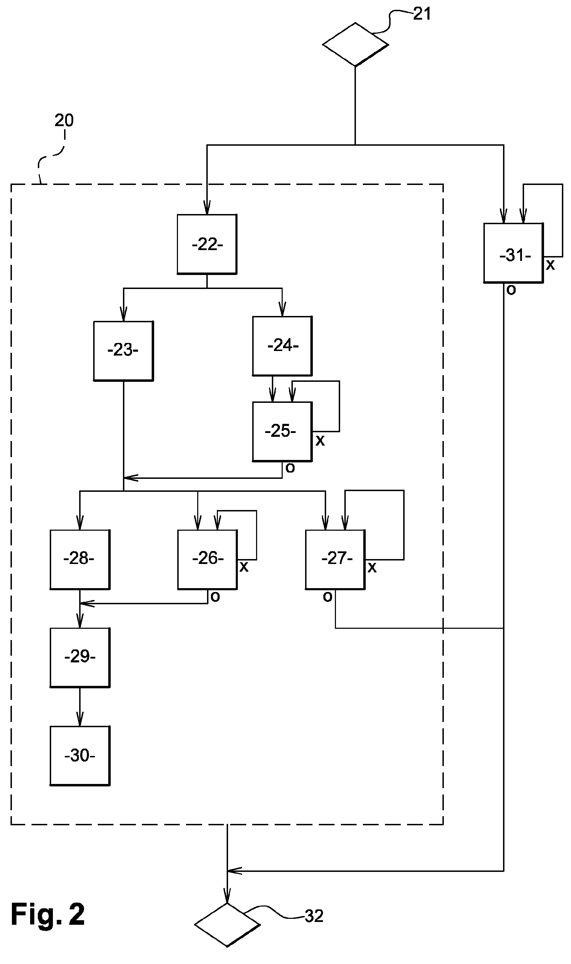

L'unité électronique **7** est à même aussi bien de gérer un démarrage du véhicule à la place du conducteur, d'une manière connue en soi, que de conduire le procédé **20** dont la logique de fonctionnement est illustrée par l'organigramme de la figure 2. Ce procédé **20** est un procédé de desserrage des freins **3.** Il est démarré par la fin **21** d'une action sur la pédale de frein **5** par le conducteur alors que le véhicule est à l'arrêt.

Dès que le conducteur cesse d'appuyer sur cette pédale de frein **5,** l'unité électronique **7** commande le maintien **22** du serrage des freins pendant une première temporisation, avantageusement comprise entre une seconde et dix secondes. A l'expiration de cette première temporisation, le dispositif d'assistance **8** commence d'effectuer un premier desserrage progressif et contrôlé **23** des freins **3.**

Parallèlement est effectuée une estimation **24** dans laquelle, au moyen d'une mesure en provenance du capteur **9** d'évaluation de l'inclinaison du véhicule, l'unité électronique **7** estime à partir de quelle valeur la pression de serrage des freins 3 n'est plus suffisante pour empêcher que le véhicule soit entraîné par son propre poids. Dans ce qui suit, cette valeur est appelée pression minimale de serrage.

Lorsque cette pression minimale de serrage a été calculée, l'unité électronique **7** la compare à la pression de serrage réelle, dans le test **25.** Tant que cette pression de serrage réelle est supérieure à la pression minimale de serrage calculée, le test **25** est réitéré régulièrement, tandis que le premier desserrage contrôlé **23** se poursuit. Ce premier desserrage **23** s'effectue à une première vitesse prédéterminée qui peut, par exemple, être de l'ordre de 50 bars/s dans le cas d'un système de freinage hydraulique, c'est-à-dire dans le cas de l'exemple illustré.

Lorsque le test **25** conclut que la pression réelle de serrage des freins **3** a atteint la pression minimale de serrage telle qu'estimée à l'étape **24,** le dispositif d'assistance **8** réduit la vitesse de desserrage des freins **3** et son unité électronique **7** se met à effectuer de nouveaux tests, qui sont les tests référencés **26** et **27.**

Après la réduction de la vitesse de desserrage des freins **3** commence un deuxième desserrage progressif et contrôlé **28** des freins **3.** Ce deuxième desserrage **28** s'effectue à une deuxième vitesse prédéterminée qui est inférieure à la première vitesse de desserrage des freins **3** et qui peut, par exemple, être de l'ordre de 10 bars/s.

Le test **26** consiste à répondre à la question de savoir si le véhicule s'est mis en mouvement. Dans la négative, ce test **26** est réitéré tandis que le desserrage **28** à la deuxième vitesse prédéterminée se poursuit.

Lorsque le test **26** conclut que le véhicule s'est mis en mouvement, l'unité électronique **7** interrompt le desserrage des freins **3** pendant une deuxième temporisation, dont la durée prédéterminée est avantageusement comprise entre 1 et 10 secondes. Le maintien **29** de la pression de serrage des freins **3** à un niveau sensiblement constant réduit voire empêche l'accélération du véhicule entraîné par son propre poids.

Qu'elle soit dans le sens d'un recul ou dans le sens contraire, la mise en mouvement du véhicule signale au conducteur que le frein de stationnement n'est pas serré ou suffisamment serré. Le conducteur peut alors immédiatement réagir en serrant ce frein de stationnement alors que la vitesse du véhicule est encore faible, de sorte que le risque d'un heurt de ce véhicule contre un obstacle demeure très faible.

A l'expiration de la deuxième temporisation, le desserrage des freins **3** reprend, par exemple à la deuxième vitesse prédéterminée ou à une autre vitesse, ce que désigne la référence **30.**

Dans le test **27,** l'unité électronique **7** vérifie si la pression de serrage des freins **3** est ou non arrivée à la valeur nulle. Tant que les freins **3** sont soumis à une pression de serrage non nulle, le test **27** est réitéré régulièrement. Lorsque les freins **3** ne sont plus soumis à une pression de serrage, l'unité électronique 7 interrompt le procédé **20,** dont la fin est désignée par la référence **32.**

Le premier desserrage **23** des freins **3** s'effectue rapidement puisque sa vitesse est élevée. Il s'arrête avant qu'un déplacement du véhicule soit détecté lors du test **26.** Un tel déplacement du véhicule est détecté alors que le desserrage des freins **3** s'effectue à la deuxième vitesse de desserrage, c'est-à-dire à faible vitesse. De ce fait, la chute de pression entre la détection d'un mouvement du véhicule et l'arrêt du desserrage des freins **3** est faible, grâce à quoi l'accélération du véhicule lors du maintien **29** du serrage des freins **3** à un niveau constant est également faible.

En même temps qu'elle exécute le procédé **20** de desserrage progressif des freins **3,** l'unité électronique **7** effectue régulièrement un test **31,** dans lequel elle vérifie l'absence ou la présence d'une commande de démarrage du véhicule. Cette commande peut, par exemple, être l'action d'appuyer sur la pédale d'accélération du véhicule. Tant qu'aucune commande de démarrage du véhicule n'est détectée, le test **31** est régulièrement réitéré sans aucune autre conséquence. En revanche, si une commande de démarrage du véhicule est détectée, l'unité électronique **7** interrompt immédiatement le procédé **20** de desserrage progressif des freins **3** et le remplace par une libération rapide des freins afin que le véhicule ne soit pas retenu lors de son démarrage.

L'invention ne se limite pas au mode de réalisation décrit précédemment. En particulier, le test **25** peut consister à comparer la pression réelle de serrage des freins **3** à une pression quelque peu supérieure à la pression minimale de serrage calculée, au lieu de la comparer à cette pression minimale de serrage calculée. Dans ce cas, la réduction de la vitesse de desserrage des freins **3** intervient avant que soit atteinte cette pression minimale de serrage calculée. On peut également envisager que, dans le test **25,** la pression réelle de serrage des freins **3** soit comparée à une pression légèrement inférieure à la pression minimale de serrage calculée.

De même, l'invention ne se limite pas au cas d'un système de freinage hydraulique. Au contraire, elle s'étend également au cas où le système de freinage est d'un autre type, en particulier au cas d'un système de freinage électrique.

## Revendications

1. Procédé de desserrage de freins (3) d'un véhicule automobile équipé d'un dispositif d'assistance au démarrage en côte (8), ce procédé comprenant une étape (23-30) dans laquelle :
b) le dispositif d'assistance (8) desserre les freins (3) progressivement si aucune commande de démarrage du véhicule n'a lieu après qu'a pris fin un maintien manuel des freins (3) du véhicule dans une position d'immobilisation de ce véhicule à l'arrêt,
au moins dans l'étape b), le dispositif d'assistance (8) effectue une action spécifique (29) en cas de détection d'une mise en mouvement du véhicule selon la direction antéro-postérieure de ce véhicule,
**caractérisé en ce que** cette action est un arrêt du desserrage des freins (3) pendant une temporisation de durée prédéterminée.

2. Procédé selon la revendication 1, **caractérisé en ce qu'**il comporte une étape (22) qui commence dès qu'a pris fin ledit maintien manuel des freins (3) dans la position d'immobilisation du véhicule et dans laquelle :
a) pendant une temporisation prédéterminée à l'expiration de laquelle est engagée l'étape b), le dispositif d'assistance (8) maintient automatiquement les freins (3) du véhicule dans ladite position d'immobilisation de ce véhicule si aucune commande de démarrage du véhicule n'a lieu.

3. Procédé selon l'une quelconque des revendications précédentes, **caractérisé en ce que**, dans l'étape b), le dispositif d'assistance (8) desserre les freins (3) à une vitesse contrôlée.

4. Procédé selon la revendication 3, **caractérisé en ce que**, au cours de l'étape b), le dispositif d'assistance (8) réduit la vitesse de desserrage des freins.

5. Procédé selon la revendication 4, **caractérisé en ce que**, au cours de l'étape b), le dispositif d'assistance (8) effectue successivement au moins une première action (23), à savoir l'action de maintenir la vitesse de desserrage des freins (3) sensiblement constante à une première valeur, puis une deuxième action, à savoir l'action de réduire la vitesse de desserrage des freins (3), puis une troisième action (28), à savoir l'action de maintenir la vitesse de desserrage des freins sensiblement constante à une deuxième valeur inférieure à ladite première valeur.

6. Procédé selon l'une quelconque des revendications précédentes, **caractérisé en ce que** le serrage des freins (3) résulte de l'application d'une pression de serrage et **en ce que**, avant la fin de l'étape b), le dispositif d'assistance (3) évalue une pression minimale de serrage en deçà de laquelle la pression de serrage des freins (3) est insuffisante pour que ces freins (3) parviennent à maintenir le véhicule immobilisé à l'encontre du poids de ce véhicule.

7. Procédé selon la revendication 6 et l'une quelconque des revendications 4 et 5, **caractérisé en ce que**, à partir d'une information relative à une mesure de ladite pression de serrage, le dispositif d'assistance (8) réduit la vitesse de desserrage des freins (3) lorsque la pression de serrage des freins (3) atteint un seuil choisi parmi ladite pression minimale de serrage et une pression de serrage différente de cette pression minimale de serrage d'une quantité prédéterminée.

8. Procédé selon l'une quelconque des revendications précédentes, **caractérisé en ce que** le dispositif d'assistance (8) vérifie régulièrement au moins une information relative à une détection d'une éventuelle commande de démarrage du véhicule, tout au long du procédé de desserrage des freins, et interrompt prématurément ce procédé si une telle commande de démarrage du véhicule est détectée.

9. Dispositif d'assistance au démarrage en côte pour un véhicule automobile, conçu pour conduire une étape (23-30) dans laquelle :
b) ce dispositif d'assistance (8) desserre les freins (3) progressivement si aucune commande de démarrage du véhicule n'a lieu après qu'a pris fin un maintien manuel des freins (3) du véhicule dans une position d'immobilisation de ce véhicule à l'arrêt,
au moins dans l'étape b), le dispositif d'assistance (8) effectue une action spécifique (29) en cas de détection d'une mise en mouvement du véhicule selon la direction antéro-postérieure de ce véhicule,
**caractérisé en ce que** cette action est un arrêt du desserrage des freins (3) pendant une temporisation de durée prédéterminée.

10. Dispositif d'assistance selon la revendication 9, **caractérisé en ce qu'**il est conçu pour mettre en oeuvre un procédé selon l'une quelconque des revendications 1 à 8.

11. Véhicule automobile, **caractérisé en ce qu'**il comporte un dispositif d'assistance (8) selon l'une quelconque des revendications 9 et 10.

## Patentansprüche

1. Verfahren zum Lösen von Bremsen (3) in einem mit einer Berganfahrhilfe (8) ausgestatteten Fahrzeug, wobei dieses Verfahren einen Schritt (23-30) umfasst, in dem:
b) die Berganfahrhilfe (8) allmählich die Bremsen (3) löst, wenn kein Befehl zum Anfahren des Fahrzeugs ausgegeben wurde, nachdem ein manuelles Halten der Bremsen (3) des Fahrzeugs in einer Fixierungsposition dieses stehenden Fahrzeugs geendet hat,
die Berganfahrhilfe (8) im Falle der Detektion eines In-Bewegung-Setzens des Fahrzeugs in die anterior-posteriore Richtung dieses Fahrzeugs zumindest in Schritt b) eine spezifische Aktion (29) durchführt,
**dadurch gekennzeichnet, dass** diese Aktion ein Stopp des Lösens der Bremsen (3) während einer Verzögerung von vorbestimmter Dauer ist.

2. Verfahren nach Anspruch 1, **dadurch gekennzeichnet, dass** es einen Schritt (22) aufweist, der beginnt, sobald das manuelle Halten der Bremsen (3) in der Fixierungsposition des Fahrzeugs geendet hat, und in dem:
a) während einer vorbestimmten Verzögerung, nach deren Ablauf Schritt b) beginnt, die Berganfahrhilfe (8) die Bremsen (3) des Fahrzeugs automatisch in der Fixierungsposition dieses Fahrzeugs hält, wenn kein Befehl zum Anfahren des Fahrzeugs ausgegeben wurde.

3. Verfahren nach einem der vorhergehenden Ansprüche, **dadurch gekennzeichnet, dass** die Berganfahrhilfe (8) in Schritt b) die Bremsen (3) mit kontrollierter Geschwindigkeit löst.

4. Verfahren nach Anspruch 3, **dadurch gekennzeichnet, dass** die Berganfahrhilfe (8) im Verlauf von Schritt b) die Geschwindigkeit des Lösens der Bremsen verringert.

5. Verfahren nach Anspruch 4, **dadurch gekennzeichnet, dass** die Berganfahrhilfe (8) im Verlauf von Schritt b) nacheinander mindestens eine erste Aktion (23) durchführt, nämlich die Aktion des im Wesentlichen Konstanthaltens der Geschwindigkeit des Lösens der Bremsen (3) auf einem ersten Wert, dann eine zweite Aktion, nämlich die Aktion des Verringerns der Geschwindigkeit des Lösens der Bremsen (3), dann eine dritte Aktion (28), nämlich die Aktion des im Wesentlichen Konstanthaltens der Geschwindigkeit des Lösens der Bremsen auf einem zweiten Wert, der kleiner ist als der erste Wert.

6. Verfahren nach einem der vorhergehenden Ansprüche, **dadurch gekennzeichnet, dass** das Anziehen der Bremsen (3) aus dem Ausüben eines Anpressdrucks resultiert, und dass die Berganfahrhilfe (3) vor dem Ende von Schritt b) einen Mindestanpressdruck ermittelt, unterhalb dessen der Anpressdruck der Bremsen (3) nicht ausreicht, damit es diesen Bremsen (3) gelingt, das Fahrzeug gegen das Gewicht dieses Fahrzeugs fixiert zu halten.

7. Verfahren nach Anspruch 6 und einem der Ansprüche 4 und 5, **dadurch gekennzeichnet, dass** die Berganfahrhilfe (8) anhand einer Information über eine Messung des Anpressdrucks die Geschwindigkeit des Lösens der Bremsen (3) verringert, wenn der Anpressdruck der Bremsen (3) einen Schwellwert erreicht, der ausgewählt ist aus dem Mindestanpressdruck und einem Anpressdruck, der sich von diesem Mindestanpressdruck um einen vorbestimmten Wert unterscheidet.

8. Verfahren nach einem der vorhergehenden Ansprüche, **dadurch gekennzeichnet, dass** die Berganfahrhilfe (8) während des gesamten Verfahrens zum Lösen der Bremsen regelmäßig mindestens eine Information über eine Detektion eines eventuellen Befehls zum Anfahren des Fahrzeugs prüft und dieses Verfahren vorzeitig unterbricht, wenn ein solcher Befehl zum Anfahren des Fahrzeugs detektiert wird.

9. Berganfahrhilfe für ein Fahrzeug, die so konzipiert ist, dass sie einen Schritt (23-30) ausführt, in dem:
b) diese Berganfahrhilfe (8) allmählich die Bremsen (3) löst, wenn kein Befehl zum Anfahren des Fahrzeugs ausgegeben wurde, nachdem ein manuelles Halten der Bremsen (3) des Fahrzeugs in einer Fixierungsposition dieses stehenden Fahrzeugs geendet hat,
die Berganfahrhilfe (8) im Falle der Detektion eines In-Bewegung-Setzens des Fahrzeugs in die anterior-posteriore Richtung dieses Fahrzeugs zumindest in Schritt b) eine spezifische Aktion (29) durchführt,
**dadurch gekennzeichnet, dass** diese Aktion ein Stopp des Lösens der Bremsen (3) während einer Verzögerung von vorbestimmter Dauer ist.

10. Berganfahrhilfe nach Anspruch 9, **dadurch gekennzeichnet, dass** sie so konzipiert ist, dass sie ein Verfahren nach einem der Ansprüche 1 bis 8 ausführt.

11. Fahrzeug, **dadurch gekennzeichnet, dass** es eine Berganfahrhilfe (8) nach einem der Ansprüche 9 und 10 aufweist.

## Claims

1. Procedure for releasing brakes (3) of a motor vehicle equipped with a hill start assistance device (8), this method comprising a step (23-30) in which:
b) the assistance device (8) releases the brakes (3) gradually if no vehicle start command occurs after a manual hold of the brakes (3) of the vehicle has ended in a position of immobilization of this vehicle when stopped,
at least in the step b), the assistance device (8) performs a specific action (29) in case of detection of a movement of the vehicle in the anteroposterior direction of this vehicle,
**characterized in that** this action is a stopping of the releasing of the brakes (3) during a time delay of predetermined duration.

2. Procedure according to Claim 1, **characterized in that** it comprises a step (22) which begins as soon as said manual hold of the brakes (3) has ended in the position of immobilization of the vehicle and in which:
a) during a predetermined time delay on expiry of which the step b) is engaged, the assistance device (8) automatically keeps the brakes (3) of the vehicle in said position of immobilization of this vehicle if no vehicle start command occurs.

3. Procedure according to any one of the preceding claims, **characterized in that**, in the step b), the assistance device (8) releases the brakes (3) at a controlled rate.

4. Procedure according to Claim 3, **characterized in that**, during the step b), the assistance device (8) reduces the rate of release of the brakes.

5. Procedure according to Claim 4, **characterized in that**, during the step b), the assistance device (8) successively performs at least one first action (23), namely the action of keeping the rate of release of the brakes (3) substantially constant at a first value, then a second action, namely the action of reducing the rate of release of the brakes (3), then a third action (28), namely the action of keeping the rate of release of the brakes substantially constant at a second value lower than said first value.

6. Procedure according to any one of the preceding claims, **characterized in that** the gripping of the brakes (3) results from the application of a gripping pressure and **in that**, before the end of the step b), the assistance device (3) assesses a minimum gripping pressure below which the gripping pressure of the brakes (3) is insufficient for these brakes (3) to manage to keep the vehicle immobilized against the weight of this vehicle.

7. Procedure according to Claim 6 and any one of Claims 4 and 5, **characterized in that**, based on an item of information relating to a measurement of said gripping pressure, the assistance device (8) reduces the rate of release of the brakes (3) when the gripping pressure of the brakes (3) reaches a threshold chosen from said minimum gripping pressure and a gripping pressure different from this minimum gripping pressure by a predetermined quantity.

8. Procedure according to any one of the preceding claims, **characterized in that** the assistance device (8) regularly checks at least one item of information relating to a detection of any vehicle start command, throughout the brake releasing procedure, and stops this procedure prematurely if such a vehicle start command is detected.

9. Hill start assistance device for a motor vehicle, designed to conduct a step (23-30) in which:
b) this assistance device (8) releases the brakes (3) gradually if no vehicle start command occurs after a manual hold of the brakes (3) of the vehicle has ended in a position of immobilization of this vehicle when stopped, and
at least in the step b), the assistance device (8) performs a specific action (29) in case of detection of a movement of the vehicle in the anteroposterior direction of this vehicle,
**characterized in that** this action is a stopping of the releasing of the brakes (3) during a time delay of predetermined duration.

10. Assistance device according to Claim 9, **characterized in that** it is designed to implement a method according to any one of Claims 1 to 8.

11. Motor vehicle, **characterized in that** it comprises an assistance device (8) according to any one of Claims 9 and 10.
